# EUROPEAN PATENT APPLICATION

(11) **EP 2 645 641 A1**
(43) Date of publication of application: **02.10.2013**
(21) Application number: 12773745.0
(22) Date of filing: 20.04.2012
(51) Int. Cl.: H04L 12/56

(54) **COMMUNICATION SYSTEM, CONTROL DEVICE, COMMUNICATION METHOD, AND PROGRAM**

(30) Priority: 21.04.2011 JP 2011095134
(71) Applicant: NEC Corporation, Tokyo 108-8001 (JP)
(72) Inventor: MORITA, Yoichiro, Tokyo 108-8001 (JP); NAKAE, Masayuki, Tokyo 108-8001 (JP); YAMAGATA, Masaya, Tokyo 108-8001 (JP); SHIMONISHI, Hideyuki, Tokyo 108-8001 (JP); SONODA, Kentaro, Tokyo 108-8001 (JP)
(74) Representative: Vossius & Partner
(86) International application number: PCT/JP2012/060672
(87) International publication number: WO 2012/144583

(57) **Abstract**

In a network having an address management apparatus executing address management, the present invention can achieve both communication from each host to the address management apparatus and central-control type path control. A communication system comprises: a plurality of forwarding nodes processing an incoming packet in accordance with a processing rule in which a matching rule for determining a packet to be processed and a processing content applied to a packet matching the matching rule are associated with each other; an address management apparatus giving an address to a host; and a control apparatus first setting a first processing rule for realizing communication between the host and the address management apparatus in a forwarding node between the host and the address management apparatus and thereafter setting a second processing rule for realizing communication between a host given an address by the address management apparatus and a predetermined network resource.

## Description

### [Technical Field]

### [REFERENCE TO RELATED APPLICATION]

The present invention is based upon and claims the benefit of the priority of Japanese patent application No. 2011-095134, filed on April 21, 2011, the disclosure of which is incorporated herein in its entirety by reference thereto.
The present invention relates to a communication system, a control apparatus, a communication method, and a program. In particular, it relates to a communication system, a control apparatus, a communication method, and a program that realizes communication by causing a forwarding node arranged in a network to forward a packet.

### [Background]

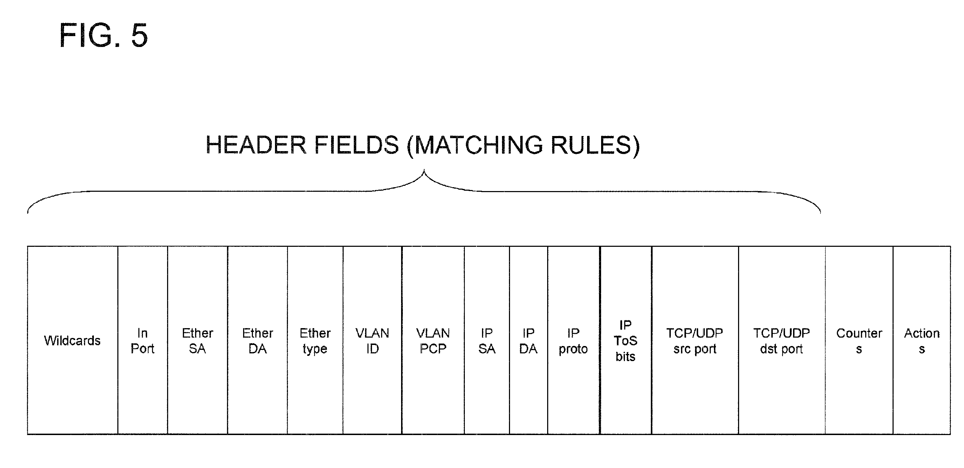

In recent years, a technique referred to as OpenFlow has been proposed (see patent literature (PTL) 1 and non patent literature (NPL) 1 and 2). OpenFlow recognizes communications as end-to-end flows and performs path control, failure recovery, load balancing, and optimization on a per-flow basis. An OpenFlow switch according to NPL 2 has a secure channel for communication with an OpenFlow controller that serves as a control apparatus. In addition, the OpenFlow switch operates according to a flow table suitably added or rewritten by the OpenFlow controller. In a flow table, a set of the following three is defined for each flow: matching rules (Header Fields) against which a packet header is matched; flow statistical information (Counters); and Actions that define processing contents (see Fig. 5).

For example, if the OpenFlow switch receives a packet, the OpenFlow switch searches the flow table for an entry having a matching rule (see Header Fields in Fig. 5) that matches header information of the incoming packet. If the OpenFlow switch finds an entry matching the incoming packet as a result of the search, the OpenFlow switch updates the flow statistical information (Counters) and processes the incoming packet based on a processing content (packet transmission from a specified port, flooding, drop, etc.) written in the Actions field of the entry. If the OpenFlow switch does not find an entry matching the incoming packet as a result of the search, the OpenFlow switch forwards the incoming packet to the OpenFlow controller via the secure channel, to request the OpenFlow controller to determine a packet path based on the source and destination nodes of the incoming packet. After receiving a flow entry realizing the packet path, the OpenFlow switch updates the flow table. In this way, by using an entry stored in the flow table as a processing rule (packet handling operation), the OpenFlow switch executes packet forwarding.

### [Citation List]

### [Patent Literature]

[PTL 1]
   International Publication WO2008/095010

### [Non Patent Literature]

[NPL 1]
   Nick McKeown, and seven others, "OpenFlow: Enabling Innovation in Campus Networks," [online], [searched on April 4, 2011], Internet <URL:http://www.openflowswitch.org//documents/openflow-wp-latest. pdf>
[NPL 2]
   "OpenFlow Switch Specification" Version 1.0.0. (Wire Protocol 0x01) [searched on April 4, 2011], Internet <URL:http://www.openflowswitch.org/documents/openflow-spec-v1.0.0 .pdf>

### [Summary]

### [Technical Problem]

The following analysis has been given by the present invention. Upon occurrence of a new flow, the OpenFlow controller disclosed in PTL 1, namely, a control apparatus in OpenFlow, executes access control by referring to an access control rule, checking permission, and calculating a path (see [0052] in PTL 1).

When a large-scale network is managed, a hierarchical management method is adopted. For example, an administrator of the entire network manages only an overall framework such as a network band definition allocated to a network such as for each base or the like, and an administrator or an administration system of each base, department, or the like manages detailed management contents such as addresses of various devices used in each base or department.

In one mode in which the above management method is adopted, a network is divided for each base or department, and a network switch, that is, a forwarding node, connects a user terminal or the like with a network in which a network resource is arranged. By arranging an address management apparatus or the like for each of the divided networks, address management can be executed, for example.

Use of the above operation makes sense, since management based on a general DHCP (Dynamic Host Configuration Protocol) or the like is limited to a single network segment (subnet). If a single network segment has an excessively large size, problems such as congestion can easily occur. Thus, the above operation makes sense in this respect too.

However, unlike management of the entire network, the above management of addresses and the like executed by an address management apparatus in each base, department, or the like is often closed within an administrator or a system in the corresponding base, organization, or department.

This is because user terminals, peripheral devices, and network resources whose addresses are managed in a base, a department, or the like are often added, deleted, or replaced in accordance with a request from an organization or a department and because these terminals, devices, and resources are frequently connected or disconnected when a network structure is reviewed. Thus, it is difficult for an administrator to manage everything in a large-scale network.

If path control of the entire network covering each base, department, or the like is executed by using a central-control-type control apparatus such as the OpenFlow controller in PTL 1, since there is no way that the control apparatus can grasp an address or the like to be allocated by an address management apparatus, an appropriate flow entry (processing rule) cannot be set, counted as a problem.

By using a flow entry (processing rule) in which an ID or a MAC (Media Access Control) address of a forwarding node arranged in a network is used as a matching rule, access control can be executed in a certain range. However, as described above, there is a case in which a host or a network resource is added, deleted, or replaced or is moved to another base or department. In such case, an appropriate flow entry (processing rule) could not be set.

In addition, there is also a need that the above control apparatus is capable of allowing a host to acquire an address from an address management apparatus before an address is given by an address management apparatus.

It is an object of the present invention to provide a communication system, a control apparatus, a policy management apparatus, a communication method, and a program that can achieve, in a network having an address management apparatus executing the above address management, both communication from each host to the address management apparatus and central-control-type path control.

### [Solution to Problem]

According to a first aspect of the present invention, there is provided a communication system, comprising: a plurality of forwarding nodes processing an incoming packet in accordance with a processing rule (packet handling operation) in which a matching rule for determining a packet to be processed and a processing content applied to a packet matching the matching rule are associated with each other; an address management apparatus giving (allocating) an address to a host; and a control apparatus first setting a first processing rule for realizing communication between the host and the address management apparatus in a forwarding node between the host and the address management apparatus and thereafter setting a second processing rule for realizing communication between a host given an address by the address management apparatus and a predetermined network resource.

According to a second aspect of the present invention, there is provided a control apparatus, connected to a plurality of forwarding nodes processing an incoming packet in accordance with a processing rule (packet handling operation) in which a matching rule for determining a packet to be processed and a processing content applied to a packet matching the matching rule are associated with each other and to an address management apparatus giving (allocating) an address to a host, and first setting a first processing rule for realizing communication between the host and the address management apparatus in a forwarding node between the host and the address management apparatus and thereafter setting a second processing rule for realizing communication between a host given an address by the address management apparatus and a predetermined network resource.

According to a third aspect of the present invention, there is provided a communication method, comprising steps of: causing a control apparatus, connected to a plurality of forwarding nodes processing an incoming packet in accordance with a processing rule (packet handling operation) in which a matching rule for determining a packet to be processed and a processing content applied to a packet matching the matching rule are associated with each other and to an address management apparatus giving (allocating) an address to a host, to set a first processing rule for realizing communication between the host and the address management apparatus in a forwarding node between the host and the address management apparatus; and causing the control apparatus to set a second processing rule for realizing communication between a host given an address by the address management apparatus and a predetermined network resource. This method is associated with a certain machine, that is, with the control apparatus controlling a plurality of forwarding nodes processing an incoming packet.

According to a fourth aspect of the present invention, there is provided a program, causing a control apparatus, connected to a plurality of forwarding nodes processing an incoming packet in accordance with a processing rule (packet handling operation) in which a matching rule for determining a packet to be processed and a processing content applied to a packet matching the matching rule are associated with each other and to an address management apparatus giving (allocating) an address to a host, to execute processes of: setting a first processing rule for realizing communication between the host and the address management apparatus in a forwarding node between the host and the address management apparatus; and setting a second processing rule for realizing communication between a host given an address by the address management apparatus and a predetermined network resource. This program can be recorded in a computer-readable storage medium. Namely, the present invention can be embodied as a computer program product.

### [Advantageous Effects of Invention]

According to the present invention, in a network having an address management apparatus executing address management, both communication from each host to the address management apparatus and central-control-type path control can be achieved.

### [Brief Description of Drawings]

Fig. 1 illustrates an outline of the present invention.
Fig. 2 illustrates a configuration of a communication system according to a first exemplary embodiment of the present invention.
Fig. 3 illustrates a configuration of a control apparatus according to the first exemplary embodiment of the present invention.
Fig. 4 is a sequence diagram illustrating an operation according to the first exemplary embodiment of the present invention.
Fig. 5 illustrates a configuration of a flow entry disclosed in NPL 2.

### [Description of Embodiments]

First, an outline of an exemplary embodiment of the present invention will be described with reference to the drawings. In the following outline, various components are denoted by reference characters for the sake of convenience. Namely, the following reference characters are merely used as examples to facilitate understanding of the present invention, not to limit the present invention to the illustrated modes.

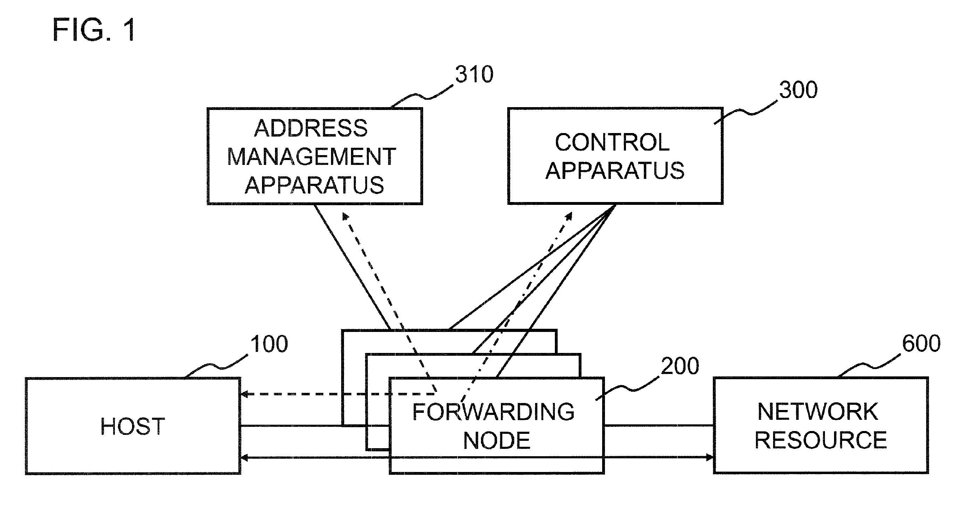

As illustrated in Fig. 1, an exemplary embodiment of the present invention can be realized by a communication system comprising: a plurality of forwarding nodes 200 processing an incoming packet in accordance with a processing rule (packet handling operation) in which a matching rule for determining a packet to be processed and a processing content applied to a packet matching the matching rule are associated with each other; an address management apparatus 310 giving (allocating) an address to a host 100; and a control apparatus 300 setting a processing rule in a forwarding node 200.

Specifically, first, the control apparatus 300 sets a first processing rule for realizing communication (see a broken line, bidirectional arrow in Fig. 1) between the host 100 and the address management apparatus 310 in a forwarding node 200 interposed between the host 100 and the address management apparatus 310. After the host 100 is given an address by the address management apparatus, the control apparatus 300 sets a second processing rule for realizing communication (see a solid bidirectional arrow in Fig. 1) between the host 100 given the address and a predetermined network resource 600. The control apparatus 300 can acquire the address given to the host 100, for example, from a processing rule setting request from the forwarding node 200 (see a doted chain-line arrow in Fig. 1).

Since a forwarding node 200 processes a packet in accordance with a processing rule set by the control apparatus 300, the forwarding node 200 cuts off communication in which the control apparatus 300 is not involved. As a result, in a network having an address management apparatus executing address management, it is possible to execute detailed path control using an address given (allocated) to each host while ensuring accessability from each host to the address management apparatus.

### [First exemplary embodiment]

Next, a first exemplary embodiment of the present invention will be described in detail with reference to the drawings. First, terms used in the following description will be described.

An "address management apparatus" is an apparatus having an address issuing function (address allocation function) based on DHCP, for example. In addition, in the present exemplary embodiment, the "address management apparatus" includes an authentication function based on the MAC address of a host. In the present exemplary embodiment, for simplicity, a general DHCP is used as a protocol used by the address management apparatus. Another protocol may be used. An essence of the present exemplary embodiment is that, while allowing communication between a host and an address management apparatus in a limited way, a control apparatus acquires information about an issued address from the content of the communication. Thus, a protocol other than DHCP may be used.

A "network resource" may encompass an application server or the like used via a network. Other examples of the "network resource" may include an authentication apparatus other than the address management apparatus using a protocol that cannot be used unless an address is issued (i.e. only after issue of an address) by the address management apparatus or using a flow that cannot be defined by an access control rule unless an address issued by the address management apparatus.

A "host" may be a computer serving as a user terminal used by being connected to a network such as in a base or a department or may be a peripheral device such as a printer or a storage used by being connected to a network. A newly-connected network resource can also be treated as a "host."

An "access control policy" is information in which an access control content given to each host is described in an abstract form. In the present exemplary embodiment, the "access control policy" is stored and managed in an access control policy storage unit of a policy management apparatus. In addition, the policy management apparatus refers to the "access control policy" and "resource information" which will be described later, to generate ACL (access control list) information and transmit the generated ACL information to the control apparatus. In the present exemplary embodiment, for simplicity, a content that "only the authenticated hosts are allowed to communicate with network resources" is set as the most basic access control policy.

A "host connection notification" is information that is transmitted from the control apparatus to the policy management apparatus and that includes an address issued to an authenticated host. In the present exemplary embodiment, for example, the host connection notification includes a combination of the MAC and IP addresses of a host.

"Resource information" is information about a host or a network resource and is stored and managed in a resource information storage unit of the policy management apparatus. The policy management apparatus refers to the "resource information" when generating the ACL information from the access control policy. In the present exemplary embodiment, the "resource information" includes a combination of the MAC and IP addresses of an authenticated host or a network resource.

The "ACL information" is information in which an access control content transmitted from the policy management apparatus to the control apparatus is described. For example, the ACL information including a combination of the MAC and IP addresses of a source host and a combination of the MAC and IP addresses of a destination network resource can be created from the access control policy representing that "only the authenticated hosts are allowed to communicate with network resources" and resource information including a combination of MAC and IP addresses. Other than the above information, for example, a communication content, direction, and accessability between a source and a destination can be included in the ACL information.

"Host management information" includes information about a host (including a network resource) connected to a forwarding node and is managed and updated by the control apparatus. In the present exemplary embodiment, the host management information includes a combination of the MAC and IP addresses of a host, an identifier of a forwarding node connected to the host, and an identifier of a connector of the forwarding node connected to the host.

An "access control rule" is information used by the control apparatus to determine whether to allow communication of a flow and is updated based on the ACL information. For example, a communication content and direction of a flow between host management information about a transmission source and host management information about a destination (network resource) are defined.

A "path" is information that is calculated by the control apparatus in a network in which a plurality of forwarding nodes are connected and that represents a series of forwarding nodes through which data is transmitted from a flow source host to a destination network resource in a flow.

A "connector address" is associated with a connector of a forwarding node to which a host as the source of a flow is connected. A "connector address" is an address of the host. In the present exemplary embodiment, a connector address includes a combination of the MAC and IP addresses of a host. Such connector address is used to determine a flow to which a processing rule is directed and is used when a process specified by a processing rule is executed. In other words, unless a connector address is set, since a processing rule matching a flow from a host connected to the port is not set, all data is discarded.

A "processing rule" (packet handling operation) is information transmitted from the control apparatus to a forwarding node. When a forwarding node receives a packet of a flow, the forwarding node refers to this information defining how the packet should be processed. A flow processed by a forwarding node is specified by causing the control apparatus to associate a connector address with identifiers of the forwarding node and the connector specified in a processing rule setting request from the forwarding node. Examples of such processing rule include a flow entry in NPL 1 in which the above identifiers of the forwarding node and connector and connector address can be set as matching rules.

A "processing rule setting request" is information transmitted from a forwarding node to the control apparatus. A "processing rule setting request" is used to request the control apparatus to set a processing rule defining a process to be executed on an unauthenticated packet that has arrived at a forwarding node. In the present exemplary embodiment, the processing rule setting request includes identifiers of a forwarding node and a connector that have received a packet and a portion of header information of the packet. A packet itself may be included in the "processing rule setting request."

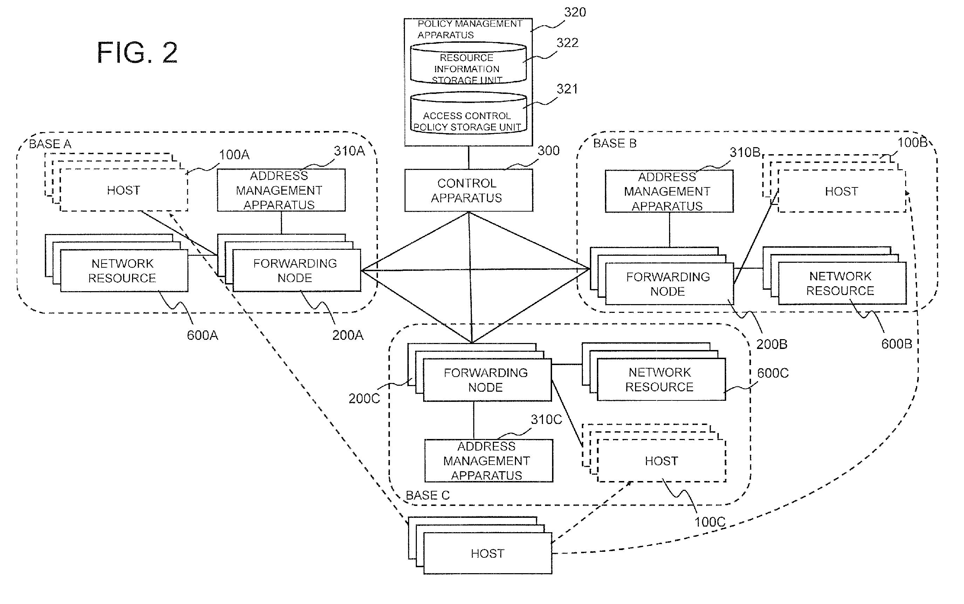

Fig. 2 illustrates a configuration of a communication system according to the first exemplary embodiment of the present invention. Referring to Fig. 2, a policy management apparatus 320, a control apparatus 300, and bases A to C connected are connected to each other.

Forwarding nodes 200A to 200C, address management apparatuses 310A to 310C, and network resources 600A to 600C are arranged in the bases A to C, respectively. The policy management apparatus 320, the control apparatus 300, the forwarding nodes arranged in each base, and so forth may be configured by separate computer systems. Alternatively, part or all of these components may be realized by a single computer system.

For example, each of the hosts 100A to 100C is realized by a CPU of an information processing apparatus that operates in accordance with a program, a storage medium such as a RAM, and a communication interface for communicating with an address management apparatus and a network resource. In addition, each of the hosts 100A to 100C can move to a different base and can be connected to a forwarding node in the different base, as illustrated in Fig. 2.

The hosts 100A to 100C transmit a packet to the address management apparatuses 310A to 310C. Based on a response from the address management apparatuses 310A to 310C, the hosts 100A to 100C receive an address therefor and set a network. After setting a network, the hosts 100A to 100C transmit an access packet for using the network resources 600A to 600C. The hosts 100A to 100C start communication, based on a response from the network resources 600A to 600C.

In response to a request from the hosts 100A to 100C, the address management apparatuses 310A to 310C issue an address and authenticate the respective hosts. For example, each of the address management apparatuses 310A to 310C is realized by a CPU of an information processing apparatus that operates in accordance with a program, a storage medium such as a RAM, and a communication interface for communicating with a corresponding one of the hosts 100A to 100C.

The network resources 600A to 600C start communication for using a service, in response to a request from the hosts 100A to 100C. For example, each of the network resources 600A to 600C is realized by a CPU of an information processing apparatus that operates in accordance with a program, a storage medium such as a RAM, and a communication interface for communicating with a corresponding one of the hosts 100A to 100C. All the bases do not necessarily include the respective network resources 600A to 600C. The communication system may include a base without a network resource.

When the forwarding nodes 200A to 200C receive a packet from the hosts, the address management apparatuses 310A to 310C, and the network resource 600A to 600C, the forwarding nodes 200A to 200C process the packet in accordance with a processing rule having a matching rule matching the packet. Each of the forwarding nodes 200A to 200C is realized by a configuration including a CPU of an information processing apparatus that operates in accordance with a program, a storage medium such as a RAM, a communication interface for communicating with the control apparatus 300, and a communication interface for acquiring a communication content exchanged among the hosts 100A to 100C, the address management apparatuses 310A to 310C, and the network resources 600A to 600C.

Based on a processing rule setting request from the forwarding nodes 200A to 200C, the control apparatus 300 creates and transmits a processing rule. For example, the control apparatus 300 is realized by a CPU of an information processing apparatus that operates in accordance with a program, a storage medium such as a RAM, and a communication interface for communicating with the policy management apparatus 320 and the forwarding nodes 200A to 200C.

Specifically, when packet information described in a processing rule setting request from any one of the forwarding nodes 200A to 200C is a packet (DHCP Discover) used when a host searches for an address management apparatus, the control apparatus 300 sets a tentative connector address (temporary connector address), which is used until an authenticated connector address is determined, in a forwarding node and a connector described in the processing rule setting request, checks an access control rule, and executes path calculation. In addition, based on the results of checking of the access control rule and execution of the path calculation, the control apparatus 300 generates a processing rule (first processing rule 1) for allowing communication by the packet from the host to the address management apparatus and transmits the processing rule to the forwarding node on the calculated path.

In addition, when packet information described in a processing rule setting request from any one of the forwarding nodes 200A to 200C is described is a packet (DHCP Offer) for offering issuing of an address from an address management apparatus to a host, the control apparatus 300 checks an access control rule and executes path calculation. In addition, based on the results of checking of the access control rule and execution of the path calculation, the control apparatus 300 generates processing rules (first processing rules 2 and 3) for allowing communication by the packet from the address management apparatus to the host and communication by a packet (DHCP Request) for requesting issuing of an address from the host to the address management apparatus. In addition, the control apparatus 300 transmits the processing rules to the forwarding node on the calculated path.

In addition, when packet information described in a processing rule setting request from any one of the forwarding nodes 200A to 200C is packet (DHCP Ack) for issuing an address from an address management apparatus to a host, the control apparatus 300 deletes the temporary connector address, acquires an issued address, sets a connector address, generates a host connection notification, and transmits the generated host connection notification to the policy management apparatus 320. When receiving the ACL information from the policy management apparatus 320, the control apparatus 300 updates the access control rule, checks the access control rule, and executes path calculation. In addition, the control apparatus 300 generates a processing rule (first processing rule 4) for allowing communication by the packet from the address management apparatus to the host. In addition, the control apparatus 300 transmits the processing rule to the forwarding node on the calculated path.

In addition, when packet information described in a processing rule setting request from any one of the forwarding nodes 200A to 200C is a packet for an access from any one of the hosts 100A to 100C to any one of the network resources 600A to 600C, the control apparatus 300 checks an access control rule and executes path calculation. In addition, based on the results of checking of the access control rule and execution of the path calculation, the control apparatus 300 generates a processing rule (second processing rule) for allowing communication by a packet from the host to the corresponding one of the network resources 600A to 600C. In addition, the control apparatus 300 transmits the processing rule to the forwarding node on the calculated path.

When receiving the host connection notification from the control apparatus 300, the policy management apparatus 320 updates the resource information storage unit 322 by using information about the authenticated host described in the notification, generates ACL information based on an access control policy in an access control policy storage unit 321 (in the present exemplary embodiment, the access control policy storage unit 321 stores the policy that "only the authenticated hosts are allowed to communicate with network resources"), and transmits the ACL information to the control apparatus 300.

The policy management apparatus 320 is an apparatus transmitting ACL information that is applied to a corresponding host in response to a host connection notification from the control apparatus 300. Specifically, the policy management apparatus 320 is realized by a CPU of an information processing apparatus that operates in accordance with a program, a storage medium such as a RAM, a communication interface for communicating with the control apparatus 300, and a storage medium such as a RAM or a hard disk.

Devices equivalent to those referred to as hosts, address management apparatuses, and network resources in a general network can be used as the above hosts, address management apparatuses, and network resources. In addition, devices equivalent to OpenFlow switches and an OpenFlow controller in OpenFlow in NPL 1 and 2 can be used as the forwarding nodes and the control apparatus.

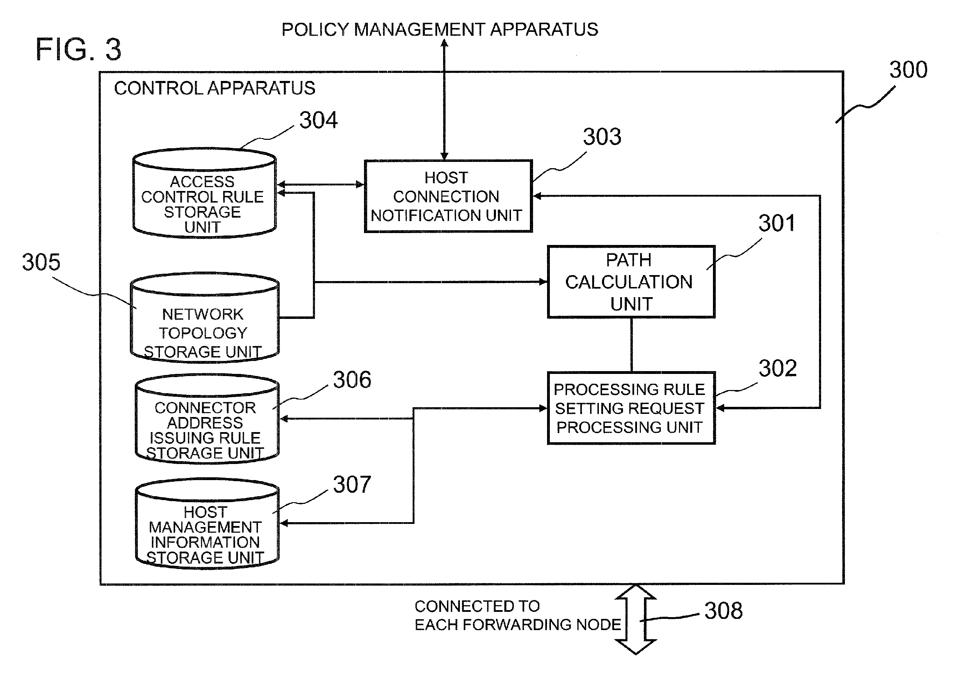

Fig. 3 is a block diagram illustrating a configuration of the above control apparatus. Referring to Fig. 3, the control apparatus 300 includes a path calculation unit 301, a processing rule setting request processing unit 302, a host connection notification unit 303, an access control rule storage unit 304 storing an access control rule, a network topology storage unit 305 storing a network topology configured by forwarding nodes, a connector address issuing rule storage unit 306 storing a connector address issuing rule, and a host management information storage unit 307 storing host management information. The control apparatus 300 communicates with forwarding nodes via secure channels 308.

The path calculation unit 301 refers to a network topology stored in the network topology storage unit 305 and an access control rule stored in the access control rule storage unit 304, to calculate a path between a host and an address management apparatus or between a host and a network resource.

Based on a processing rule setting request from the forwarding nodes 200A to 200C, the processing rule setting request processing unit 302 gives a necessary instruction to the path calculation unit 301 or the host connection notification unit 303. Based on the results, the processing rule setting request processing unit 302 generates a processing rule and sets the generated processing rule in a forwarding node. In addition, when packet information described in a processing rule setting request from the forwarding nodes 200A to 200C is a packet (DHCP Discover) used when a host searches for an address management apparatus, the processing rule setting request processing unit 302 sets a tentative connector address (temporary connector address). In addition, when setting a tentative connector address (temporary connector address) or when receiving an authenticated connector address, the processing rule setting request processing unit 302 updates host management information stored in the host management information storage unit 307.

When receiving an authenticated address, the host connection notification unit 303 transmits a host connection notification including host management information to the policy management apparatus 320. When receiving ACL information from the policy management apparatus 320, based on the content of the information, the host connection notification unit 303 updates an access control rule stored in the access control rule storage unit 304.

Each of the above path calculation unit 301, the processing rule setting request processing unit 302, the host connection notification unit 303 of the control apparatus 300 can be realized by a computer program causing a computer constituting the control apparatus to use hardware of the computer and to execute a corresponding process of the above control apparatus 300.

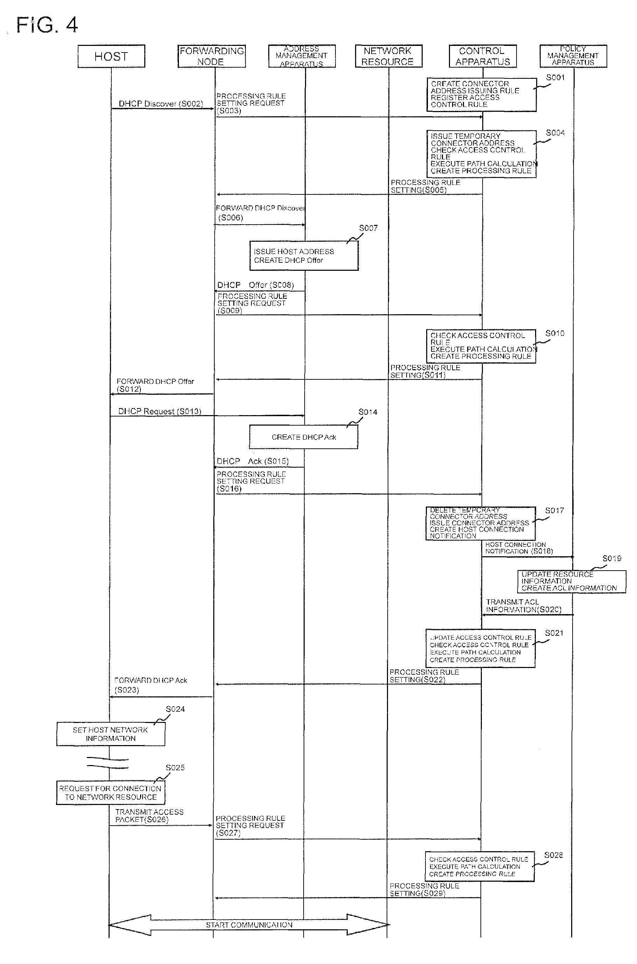

Next, an operation of the present exemplary embodiment will be described in detail with reference to the drawings. Hereinafter, with reference to a sequence diagram in Fig. 4, the present exemplary embodiment will be described based on a process in which the host 100A is connected in the base A and starts with communication with the network resource 600A.

### (1) Step S001

First, the control apparatus 300 sets a connector address issuing rule. The connector address issuing rule is used when the control apparatus 300 generates a processing rule corresponding to a DHCP Discover packet representing that an IP address has not been issued in step S004 to issue a temporary connector address.

In addition, the control apparatus 300 registers an access control rule. This access control rule is used when the control apparatus 300 generates a processing rule corresponding to DHCP Discover representing that an IP address has not been issued in step S004 to determine which host connected to a forwarding node and a connector needs to be connected to which address management apparatus.

For example, an access control rule for communication with the address management apparatus 310A is set for the host 100A connected to the forwarding node 200A in the base A in Fig. 2.

### (2) Step S002

Next, the host 100A creates and transmits a DHCP Discover packet.

### (3) Step S003

Next, the forwarding node 200A hooks the packet transmitted in step S002, creates a processing rule setting request from the packet and identifiers of a forwarding node and a connector at which the packet has arrived, and transmits the processing rule setting request to the control apparatus 300.

### (4) Step S004

Next, based on the processing rule setting request transmitted in step S003, the control apparatus 300 checks the access control rule, executes path calculation between the source host of the packet and an address management apparatus associated with the host, and creates a processing rule (first processing rule 1).

Since the processing rule setting request transmitted in step S003 is a processing rule setting request corresponding to a DHCP Discover packet, the control apparatus 300 determines that a temporary connector address is necessary. Thus, the control apparatus 300 refers to the connector address issuing rule set in step S001 and issues a temporary connector address.

Namely, since the IP address of the host 100A is not described in the processing rule setting request and the IP address that is to be set by the host 100A in step S024 is unknown, as a source IP address necessary for defining a flow in the processing rule generated by the control apparatus 300, separately from the IP address set in step S024, the control apparatus 300 sets a temporary address used for distinguishing a flow for convenience, as a tentative connector address.

Since the access control rule for allowing communication between the host 100A connected to the forwarding node 200A and the address management apparatus 310A has already been set in step S001, in the path calculation, a forwarding node and a connector connecting a forwarding node and a connector connected to the host 100A and a forwarding node and a connector connected to the address management apparatus 310A are determined.

In addition, a matching rule for allowing only a DHCP Discover packet is set in this processing rule (first processing rule 1).

In this way, the forwarding node can distinguish a packet transmitted from the host 100A and forward the packet to the address management apparatus. In addition, the address management apparatus 310A may be configured to reject the subsequent communication if the address management apparatus 310A does not issue an address as a result of the authentication operation on the host 100A in step S007.

### (5) Step S005

Next, the control apparatus 300 transmits the processing rule created in step S004 to the forwarding node 200A.

### (6) Step S006

Next, in accordance with the processing rule transmitted in step S005, the forwarding node 200A forwards the packet hooked in step S003 to the address management apparatus 310A.

### (7) Step S007

Next, the address management apparatus 310A receives the DHCP Discover packet transmitted in step S002 and forwarded in step S006. Based on the content of the packet, the address management apparatus 310A issues an IP address to the host 100A and creates a DHCP Offer packet.

If the host 100A is a host to which an address must not be issued, the address management apparatus 310A discards the packet.

### (8) Step S008

Next, the address management apparatus 310A transmits the DHCP Offer packet created in step S007.

### (9) Step S009

Next, the forwarding node 200A hooks the packet transmitted in step S008. Based on the packet and the identifiers of the forwarding node and the connector at which the packet has arrived, the forwarding node 200A generates a processing rule setting request and transmits the processing rule setting request to the control apparatus 300.

### (10) Step S010

Next, based on the processing rule setting request transmitted in step S009, the control apparatus 300 checks the access control rule, executes path calculation, and creates a processing rule (first processing rules 2 and 3).

The processing rule setting request transmitted in step S009 is a processing rule setting request corresponding to a DHCP Offer packet, the control apparatus 300 determines that the address management apparatus has issued an address as a result of the authentication operation in step S007 and creates processing rules (first processing rules 2 and 3) for allowing communication by the DHCP Offer packet from the address management apparatus 310A to the host 100A and a DHCP Request packet from the host 100A to the address management apparatus 310A.

In this step, the control apparatus 300 does not create a processing rule (first processing rule 4) for allowing a DHCP Ack. This is to acquire a real IP address that is to be issued to the host 100A from a DHCP Ack packet in step S017 by causing the forwarding node to generate a processing rule setting request corresponding to a DHCP Ack packet in step S016. For example, if the forwarding node includes a DHCP Ack packet automatic notification function, the control apparatus 300 may create and transmit a processing rule for allowing DHCP Ack in this step.

### (11) Step S011

Next, the control apparatus 300 transmits the processing rule created in step S010 to the forwarding node 200A.

### (12) Step S012

Next, the forwarding node 200A forwards the packet hooked in step S009 to the host 100A, in accordance with the processing rule transmitted in step S011.

### (13) Step S013

Next, the host 100A receives the DHCP Offer packet transmitted in step S008 and forwarded in step S012. Based on the contents of the packet, the host 100A creates and transmits a DHCP Request packet.

### (14) Step S014

Next, the address management apparatus 310A receives the DHCP Request packet transmitted in step S013. Based on the content of the packet, the address management apparatus 310A creates a DHCP Ack packet.

### (15) Step S015

Next, the address management apparatus 310A transmits the DHCP Ack packet created in step S014.

### (16) Step S016

Next, the forwarding node 200A hooks the packet transmitted in step S015, generates a processing rule setting request from the packet and the identifiers of the forwarding node and the connector at which the packet has arrived, and transmits the processing rule setting request to the control apparatus 300.

### (17) Step S017

Since the processing rule setting request transmitted in step S016 is a processing rule setting request corresponding to a DHCP Ack packet, the control apparatus 300 determines that the real IP address of the host 100A necessary for issuing a real connector address can be acquired. Thus, the control apparatus 300 deletes the temporary connector address registered as host management information of the host from the host management information storage unit and updates the host management information to the real IP address acquired from the DHCP Ack packet.

Next, the control apparatus 300 creates a host connection notification. To update the access control rule relating to a flow defined by this real connector address simultaneously with the above updating of the host management information, the control apparatus 300 creates a host connection notification to notify the policy management apparatus 320 of the host management information of the authenticated host 100A.

### (18) Step S018

Next, the control apparatus 300 transmits the host connection notification created in step S017 to the policy management apparatus 320.

### (19) Step S019

Next, the policy management apparatus 320 receives the host connection notification transmitted in step S018 and updates the resource information storage unit based on the content of the notification. Based on the update result and the access control policy (policy that "only the authenticated hosts are allowed to communicate with network resources) stored in the policy storage unit, the policy management apparatus 320 creates ACL information.

An access control content relating to the authenticated host 100A described in the host connection notification created in step S017 is described in the ACL information.

### (20) Step S020

Next, the policy management apparatus 320 transmits the ACL information created in step S019 to the control apparatus 300.

### (21) Step S021

Next, the control apparatus 300 updates the access control rule based on the ACL information transmitted in step S020. In addition, based on the processing rule setting request transmitted in step S016, the control apparatus 300 executes path calculation, based on the updated access control rule. In addition, the control apparatus 300 creates a processing rule (second processing rule).

As the communication allowed for the authenticated host 100A, the updated access control rule includes definitions of a DHCP flow between the host 100A and the address management apparatus 310A and between the host 100A and the network resource 600A.

Thus, a processing rule relating to another network resource can be included in the processing rule created in step S021, as a response to the processing rule setting request relating to DHCP Ack transmitted in step S016, in addition to the processing rule relating to DHCP between the host 100A and the address management apparatus 310A. However, regarding such processing rule relating to another network resource, if everything is generated and transmitted, the amount could be excessively large. If this happens, much waste is caused in the communication amount between the control apparatus and the forwarding node and in the throughput of the forwarding node. Thus, in the present exemplary embodiment, after an access packet is transmitted to a network resource, as needed, a processing rule setting request is received. In this way, the minimum necessary processing rule can be created and transmitted.

### (22) Step S022

Next, the control apparatus 300 transmits the processing rule created in step S021 to the forwarding node 200A.

### (23) Step S023

Next, the forwarding node 200A forwards the packet hooked in step S016 to the host 100A, in accordance with the processing rule transmitted in step S022.

### (24) Step S024

Next, the host 100A receives the DHCP Ack packet transmitted in step S015 and forwarded in step S022. Based on the content of the packet, the host 100A sets a network therefor.

(25) Step S025
Next, for example, the host 100A executes an operation to use the network resource 600A.

### (26) Step S026

Next, the host 100A transmits an access packet to the network resource 600A, based on the operation executed in step S025.

### (27) Step S027

Next, the forwarding node 200A hooks the packet transmitted in step S026, generates a processing rule setting request from the packet and the identifiers of the forwarding node and the connector at which the packet has arrived, and transmits the processing rule setting request to the control apparatus 300.

### (28) Step S028

Next, based on the processing rule setting request transmitted in step S027, the control apparatus 300 checks the access control rule, executes path calculation, and creates a processing rule.

### (29) Step S029

Next, the control apparatus 300 transmits the processing rule created in step S028 to the forwarding node 200A.

In this way, communication between the host 100A and the network resource 600A is started.

As described above, according to the present exemplary embodiment, by using devices referred to as hosts, address management apparatuses, and network resources in a general network, it is possible to configure a communication system in which the control apparatus such as that used in OpenFlow in NPL 1 and 2 controls forwarding nodes in a centralized manner.

In addition, in the present exemplary embodiment, since an address management apparatus executes an authentication process, it is possible to execute access control in which flows only from authenticated hosts are allowed.

While a preferred exemplary embodiment of the present invention has thus been described, the present invention is not limited to the above exemplary embodiment. Further variations, substitutions, or adjustments may be made without departing from the basic technological concept of the present invention. For example, the network configuration in Fig. 2 is simplified to facilitate understanding of the present invention. Namely, various types of variations are possible. In addition, in the above first exemplary embodiment, flow control in a certain base A has been described as an example. However, by setting processing rules for allowing access to the network resources 600B and 600C in the bases B and C in the host 100A located in the base A, access control over different bases/departments can be executed.

In addition, in the above exemplary embodiment, each time the forwarding nodes 200A to 200C receive an unknown packet, the forwarding nodes 200A to 200C transmit a processing rule setting request to the control apparatus 300. However, for example, the control apparatus 300 may collectively set a plurality of processing rules or may previously set processing rules for processing packets from hosts having certain MAC addresses in forwarding nodes. In this way, load on the control apparatus 300 can be reduced. For example, first processing rules 1 to 4 according to the first exemplary embodiment can collectively be set. In this case, regarding an IP address acquired by a DHCP Ack packet, it is only necessary, when the DHCP Ack packet is received, to add a processing rule for notifying the control apparatus of the IP address or forwarding the DHCP Ack packet to the control apparatus, to the collectively-set processing rules.

In addition, in the above exemplary embodiment, each time the forwarding nodes 200A to 200C receive an unknown packet, the forwarding nodes 200A to 200C transmit a processing rule setting request to the control apparatus 300. However, the forwarding nodes 200A to 200C may be configured to discard such unknown packet by default. The forwarding nodes 200A to 200C may be configured to transmit a processing rule setting request only for packets having predetermined information, for example.

In addition, in the above exemplary embodiment, if a host that has transmitted a DHCP Discover packet is a host to which an address must not be issued, the address management apparatus 310A discards the DHCP Discover packet and disconnects communication with the host. However, based on a notification from the address management apparatus 310A, the control apparatus 300 may set a processing rule (third processing rule) for discarding packets from the host in the forwarding nodes 200A to 200C (or in applicable one(s) of the forwarding nodes 200A to 200C to which the host is connected). In this way, transmission of processing rule setting requests, which would be caused by reception of packets by the forwarding nodes 200A to 200C from a host executing unauthorized access, can be prevented.

### [Industrial Applicability]

The present invention is suitably applicable to an environment in which network management is executed by arranging an administrator for each of a plurality of bases, departments, or organizations of a company or the like. In particular, a communication system capable of executing flow-based detailed central control can be realized, without modifying a currently-established network configuration, network management system, or processing procedure of an authentication apparatus such as an address management apparatus.
The entire disclosures of the above PTL and NPL are incorporated herein by reference thereto.
Modifications and adjustments of the exemplary embodiments and examples are possible within the scope of the overall disclosure (including the claims and the drawings) of the present invention and based on the basic technical concept of the present invention. Various combinations and selections of various disclosed elements (including the elements in each of the claims, examples, drawings, etc.) are possible within the scope of the claims and the drawings of the present invention. That is, the present invention of course includes various variations and modifications that could be made by those skilled in the art according to the overall disclosure including the claims and the technical concept.

### [Reference Signs List]

- 100A to 100C: host
- 200A to 200C: forwarding node
- 300: control apparatus
- 301: path calculation unit
- 302: processing rule setting request processing unit
- 303: host connection notification unit
- 304: access control rule storage unit
- 305: network topology storage unit
- 306: connector address issuing rule storage unit
- 307: host management information storage unit
- 308: secure channel
- 310A to 310C: address management apparatus
- 320: policy management apparatus
- 321: access control policy storage unit
- 322: resource information storage unit
- 600A to 600C: network resource

## Claims

1. A communication system, comprising:
a plurality of forwarding nodes processing an incoming packet in accordance with a processing rule in which a matching rule for determining a packet to be processed and a processing content applied to a packet matching the matching rule are associated with each other;
an address management apparatus giving an address to a host; and
a control apparatus first setting a first processing rule for realizing communication between the host and the address management apparatus in a forwarding node between the host and the address management apparatus and thereafter setting a second processing rule for realizing communication between a host given an address by the address management apparatus and a predetermined network resource.

2. The communication system according to claim 1,
wherein the control apparatus generates, as the second processing rule, a processing rule having a matching rule for determining a packet to be processed, by using the address given to the host by the address management apparatus.

3. The communication system according to claim 1 or 2,
wherein the control apparatus acquires the address given by the address management apparatus from a processing rule setting request received from a forwarding node between the host and the address management apparatus.

4. The communication system according to any one of claims 1 to 3,
wherein the control apparatus generates the second processing rule by referring to information about access authority given to the host.

5. The communication system according to any one of claims 1 to 4, further comprising:
a policy management apparatus providing information about access authority given to the host.

6. The communication system according to any one of claims 1 to 5,
wherein a plurality of address management apparatuses, each of which is configured as said address management apparatus, are arranged; and
wherein the control apparatus selects an address management apparatus associated with the host from among the plurality of address management apparatuses.

7. The communication system according to any one of claims 1 to 6,
wherein the control apparatus sets a third processing rule for discarding a packet in a forwarding node connected to a host to which an address is not given by the address management apparatus.

8. A control apparatus, wherein
the control apparatus is connected to a plurality of forwarding nodes processing an incoming packet in accordance with a processing rule in which a matching rule for determining a packet to be processed and a processing content applied to a packet matching the matching rule are associated with each other and to an address management apparatus giving an address to a host, and wherein
the control apparatus first sets a first processing rule for realizing communication between the host and the address management apparatus in a forwarding node between the host and the address management apparatus and thereafter sets a second processing rule for realizing communication between a host given an address by the address management apparatus and a predetermined network resource.

9. A communication method, comprising steps of:
causing a control apparatus, connected to a plurality of forwarding nodes processing an incoming packet in accordance with a processing rule in which a matching rule for determining a packet to be processed and a processing content applied to a packet matching the matching rule are associated with each other and to an address management apparatus giving an address to a host, to set a first processing rule for realizing communication between the host and the address management apparatus in a forwarding node between the host and the address management apparatus; and
causing the control apparatus to set a second processing rule for realizing communication between a host given an address by the address management apparatus and a predetermined network resource.

10. A program, wherein the program causes a control apparatus, connected to a plurality of forwarding nodes processing an incoming packet in accordance with a processing rule in which a matching rule for determining a packet to be processed and a processing content applied to a packet matching the matching rule are associated with each other and to an address management apparatus giving an address to a host, to execute processes of:
setting a first processing rule for realizing communication between the host and the address management apparatus in a forwarding node between the host and the address management apparatus; and
setting a second processing rule for realizing communication between a host given an address by the address management apparatus and a predetermined network resource.
